# FASCICULE DE BREVET EUROPEEN

(11) **EP 1 528 661 B1**
(45) Date de publication et mention de la délivrance du brevet: **09.07.2008**
(21) Numéro de dépôt: 04105379.4
(22) Date de dépôt: 28.10.2004
(51) Int. Cl.: H02M 1/08, H02M 7/217

(54) **Circuit de commande d'un transistor MOS pour redresseur synchrone**
Steuerschaltung für einen MOS-Transistor für Synchrongleichrichter
MOS transistor control circuit for synchronous rectifier

(30) Priorité: 31.10.2003 FR 0312816
(43) Date de publication de la demande: 04.05.2005
(73) Titulaire: ST MICROELECTRONICS S.A., 92120 Montrouge (FR)
(72) Inventeur: Rivet, Bertrand, 37540, SAINT CYR SUR LOIRE (FR)
(74) Mandataire: de Beaumont, Michel

(56) Documents cités:
- EP-A- 0 884 829
- EP-A- 0 891 038
- US-A- 5 268 833
- US-A- 5 744 994

## Description

La présente invention concerne les éléments de redressement d'une tension alternative. L'invention concerne plus particulièrement la réalisation d'une fonction de redressement (diode) au moyen d'un transistor MOS.

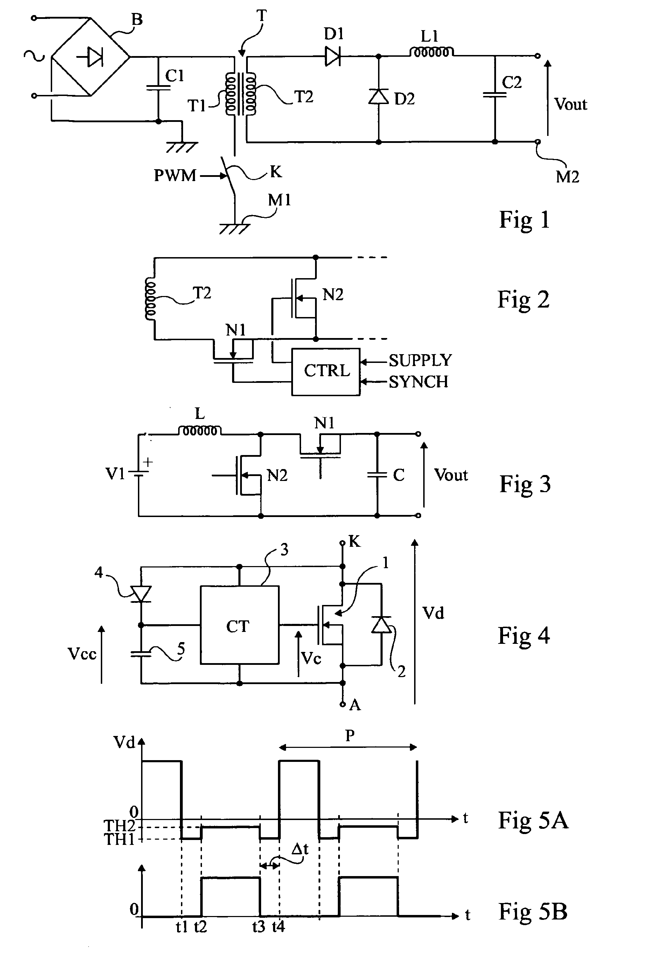

La figure 1 représente, de façon très schématique, un premier exemple de circuit utilisant des éléments de redressement du type auquel peut s'appliquer la présente invention. Dans cet exemple, il s'agit d'un convertisseur dit de type "Forward". Un tel convertisseur est essentiellement constitué d'un transformateur T dont un enroulement primaire T1 reçoit une tension continue fournie par un condensateur C1 connecté en sortie d'un pont de diode B alimenté par une tension alternative. L'enroulement T1 est connecté par un interrupteur K à la masse. L'interrupteur K est commandé en modulation de largeur d'impulsion par un signal PWM (haute fréquence par rapport à l'alimentation alternative) établi de façon à réguler une tension continue Vout fournie par le convertisseur. Cette tension Vout est fournie côté secondaire T2 aux bornes d'un condensateur C2 stockant l'énergie transférée du primaire T1 au secondaire T2 du transformateur pendant les périodes où l'interrupteur K est fermé. Une première extrémité de l'enroulement secondaire T2 est connectée, par une diode D1 en série avec une inductance L1, à une première électrode du condensateur C2 définissant une borne positive de sortie, tandis que son autre extrémité est reliée directement à l'autre électrode du condensateur C2 définissant la masse M2 côté tension Vout. Une diode D2 de roue libre relie le point milieu de l'association série entre la diode D1 et l'inductance L1 à la masse M2, l'anode de la diode étant côté masse. Le fonctionnement d'un tel convertisseur est connu.

Les éléments de redressement sont ici constitués des diodes D1 et D2 qui ont l'inconvénient de présenter une tension de seuil de d'ordre de 0,3 à 1,5 Volts, préjudiciable au rendement du convertisseur, notamment dans des applications basse tension.

La figure 2 illustre partiellement et de façon schématique, une modification appliquée à un convertisseur PWM de la figure 1 afin de diminuer la tension de seuil des éléments de redressement. En figure 2, seule une partie du secondaire a été représentée, le reste étant similaire à la figure 1. Pour diminuer la tension de seuil des diodes D1 et D2, on remplace celles-ci par deux transistors MOS à canal N N1 et N2 que l'on commande de façon adéquate par un circuit particulier CTRL. Pour des questions de référence de tension, le transistor N1 remplaçant la diode D1 doit toutefois être placé sur la branche de masse du convertisseur, le transistor N2 pouvant lui être placé de la même façon que la diode D2 de la figure 1. Le circuit de commande CTRL reçoit par ailleurs une tension d'alimentation SUPPLY ainsi qu'un signal de synchronisation SYNCH par rapport au découpage de la tension continue opéré côté primaire, afin de synchroniser les ouvertures et fermetures respectives des transistors N1 et N2 avec les ouvertures et fermetures de l'interrupteur K (non représenté en figure 2).

Un inconvénient du circuit de redressement synchrone de la figure 2 est que les transistors N1 et N2 ne peuvent pas avoir de fonctionnement autonome. Ils ont besoin d'un signal de synchronisation provenant du primaire ainsi que d'une tension d'alimentation.

Un autre inconvénient est la présence d'un transistor MOS sur la ligne de masse et non sur la ligne haute côté secondaire.

La figure 3 illustre un autre exemple de convertisseur de tension auquel s'applique la présente invention. Il s'agit d'un convertisseur continu-continu dont le rôle est d'élever une tension de sortie Vout par rapport au niveau d'une tension d'entrée V1 fournie, par exemple, par une batterie. L'électrode positive de la batterie V1 est connectée à une première extrémité d'une inductance L dont l'autre extrémité est reliée, par un premier transistor MOS N1, à une première électrode d'un condensateur de sortie C aux bornes duquel est prélevée la tension de sortie Vout. Le point milieu de l'association série de l'inductance L et du transistor N1 est par ailleurs connecté, par un transistor N2, à la masse définie par l'électrode négative de la batterie V1 à laquelle est connectée la deuxième électrode du condensateur C. Dans une telle application, la commande des transistors N1 et N2 est particulièrement délicate dans la mesure où elle requiert un décaleur de niveau pour commander le transistor N1 qui ne possède pas de référence à la masse.

On connaît parmi des circuits de redressement autonome, c'est-à-dire à deux bornes, incluant un transistor MOS et son circuit de commande, par exemple celui décrit dans la demande de brevet EP 0 891 830 A1.

Un tel système présente toutefois un certain nombre d'inconvénients, dont notamment l'absence de l'ouverture du transistor en avance par rapport à l'apparition de l'alternance positive, pour éviter une conduction, même si de courte durée, du système pendant l'alternance positive.

Il serait souhaitable de disposer d'un élément de redressement à faible tension de seuil, qui ne pose pas les problèmes de commande des transistors MOS dans les configurations classiques.

La présente invention vise à proposer un circuit de commande autonome d'un transistor MOS assurant une fonction de redressement.

Pour atteindre ces objets ainsi que d'autres, la présente invention prévoit un circuit de commande d'un commutateur à commander de façon unidirectionnelle alors que la tension présente à ses bornes est une tension alternative, comportant :
des moyens pour retarder la fermeture du commutateur par rapport à un passage par zéro de la tension à ses bornes ; et
des moyens pour déclencher l'ouverture du commutateur suite à sa fermeture, à l'issu d'un intervalle de temps prédéterminé majoré ou minoré d'un temps d'erreur asservi sur le rapport cyclique de la tension alternative aux bornes du commutateur, lors d'une ou plusieurs périodes précédentes.

Selon un mode de réalisation de la présente invention, ladite durée prédéterminée est choisie en fonction des variations maximales attendues du rapport cyclique.

Selon un mode de réalisation de la présente invention, un condensateur et une diode sont connectés en série entre les bornes du commutateur pour fournir une tension d'alimentation au circuit de commande, le condensateur étant chargé quand l'interrupteur est ouvert.

Selon un mode de réalisation de la présente invention, le circuit de commande comprend :
un circuit de détection du signe de la tension aux bornes du commutateur ;
un générateur de rampe réinitialisé à chaque changement de signe de la tension aux bornes du commutateur dans un sens où il doit devenir conducteur, ledit générateur étant commandé par le circuit de détection ;
un moyen pour provoquer la fermeture du commutateur suite à la détection d'un changement de signe de la tension à ses bornes ; et
un circuit d'asservissement de la durée de fermeture sur une valeur prédéterminée.

Selon un mode de réalisation de la présente invention, un premier élément retardateur apporte un retard minimal à une consigne d'ouverture du commutateur qui suit sa fermeture.

Selon un mode de réalisation de la présente invention, un deuxième élément retardateur apporte un retard à la fermeture du commutateur par rapport à l'inversion de la tension à ses bornes.

Selon un mode de réalisation de la présente invention, un amplificateur de sortie fournissant le signal de commande du commutateur est commandé par des moyens de détection d'une inversion de sens de la tension, pour provoquer l'ouverture du commutateur en cas d'inversion accidentelle de tension.

Selon un mode de réalisation de la présente invention, le commutateur est un transistor MOS.

Selon un mode de réalisation de la présente invention, une diode en parallèle sur le commutateur sert au démarrage.

L'invention prévoit également un circuit de redressement à faible tension de seuil comprenant un commutateur en parallèle avec une diode constituée de préférence de sa diode parasite, et un circuit de commande associé à un circuit d'alimentation prélevant son alimentation directement aux bornes du transistor commandé pendant que celui-ci est fermé.

Selon un mode de réalisation de la présente invention, le circuit de redressement comporte exclusivement deux bornes de connexion externe.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
les figures 1 à 3 décrites précédemment illustrent des exemples classiques de montage d'éléments de redressement auquel s'applique la présente invention ;
la figure 4 représente, de façon très schématique, un mode de réalisation d'un circuit de redressement à base de transistor MOS selon la présente invention ;
les figures 5A et 5B illustrent, par des chronogrammes, le fonctionnement du circuit de la figure 4 ;
la figure 6 représente un mode de réalisation d'un circuit de commande d'un transistor MOS monté en élément de redressement selon la présente invention ;
les figures 7A à 7H illustrent, sous forme de chronogrammes, le fonctionnement du circuit de la figure 6 ; et
la figure 8 représente une variante d'un circuit de commande selon l'invention, incluant des dispositifs de protection optionnels.

Les mêmes éléments ont été désignés par les mêmes références aux différentes figures. Pour des raisons de clarté, seuls les éléments qui sont nécessaires à la compréhension de l'invention ont été représentés aux figures et seront décrits par la suite. En particulier, toutes les applications possibles d'un circuit de redressement autonome selon l'invention n'ont pas été détaillées, celle-ci s'appliquant de façon générale au remplacement d'une diode dans une fonction de redressement par un transistor MOS et son circuit de commande.

Une caractéristique de la présente invention est de commander un transistor MOS, dont le drain et la source définissent deux bornes d'extrémité du circuit de redressement, en synchronisant ses périodes de conduction exclusivement en fonction de la tension présente à ses bornes (entre drain et source).

De préférence, le circuit de commande est autonome, c'est-à-dire qu'il prélève l'énergie nécessaire à son fonctionnement aux deux bornes du transistor MOS.

L'invention réalise ainsi une fonction de diode au moyen d'un circuit autonome ayant exclusivement deux bornes à connecter au reste de l'application.

La figure 4 représente, de façon schématique et sous forme de blocs, un circuit de redressement à transistor MOS selon l'invention. Ce circuit comprend essentiellement un transistor MOS 1 à canal N dont la source définit l'anode A du circuit de redressement et dont le drain en définit la cathode K. Une diode 2 est connectée en parallèle sur le transistor 1 avec son anode confondue avec la source du transistor 1. En pratique, la diode 2 pourra être constituée par la diode parasite du transistor 1.

Selon l'invention, la grille du transistor 1 reçoit une tension de commande Vc fournie par un circuit 3 (CT) qui fixe les périodes de conduction du transistor 1 en fonction de la tension détectée à ses bornes. Pour cela, le circuit 3 comprend deux bornes respectivement connectées aux électrodes K et A. Le circuit 3 est par ailleurs alimenté de façon autonome par une tension Vcc extraite directement de la tension entre les bornes K et A. Dans l'exemple de la figure 4, le circuit d'alimentation est constitué d'une diode 4 dont l'anode est connectée à la cathode K du circuit et dont la cathode est reliée, par un condensateur 5 de stockage, à l'anode A. La tension Vcc à destination du circuit 3 est prélevée aux bornes du condensateur 5. Ce mode de réalisation est un mode de réalisation simplifié dont des versions améliorées seront exposées par la suite.

Selon l'invention, on utilise les alternances pendant lesquelles le transistor 1 est bloqué parce que la tension Vd entre ses bornes K et A est positive (avec les conventions prises aux figures) pour charger le condensateur 5, la diode 4 étant pendant ces périodes polarisée en direct. Pendant les alternances où la tension Vd est négative, le transistor 1 est rendu passant par le circuit 3 et la diode 4 empêche au condensateur 5 de se décharger autrement qu'en alimentant le circuit 3.

On voit donc que l'invention remplit une fonction de redressement dans le cas où la tension présente entre les bornes K et A est une tension qui change de sens, c'est-à-dire provient d'une source alternative. Plus particulièrement, l'invention s'applique au cas où la tension Vd est du type à découpage à fréquence relativement élevée (plusieurs dizaines de kilohertz) afin de ne pas requérir un condensateur 5 de taille trop importante, celui-ci devant en effet maintenir une charge suffisante pendant les périodes où le transistor 1 conduit.

Bien sûr, la tension Vcc nécessaire au fonctionnement du circuit 3 pourrait être fournie par d'autres moyens, notamment pour le cas où une tension adéquate est disponible dans le reste du circuit. Toutefois, l'obtention de la tension Vcc directement par la tension aux bornes du circuit de l'invention est préférable dans la mesure où cela permet d'obtenir un circuit complètement autonome et sans problème de référence de tension.

Les figures 5A et 5B illustrent respectivement, sous forme de chronogrammes, un exemple d'allure de tension Vd aux bornes du transistor 1 et la tension de commande Vc correspondante fournie par le circuit 3.

Tant que le condensateur 5 est déchargé (démarrage du système), le transistor 1 est bloqué quelle que soit la tension Vd (le circuit 3 n'est pas alimenté et ne peut donc pas assurer la commande). Une conduction éventuelle pendant les périodes où le potentiel de la borne A est supérieur au potentiel de la borne K (tension Vd négative avec les conventions prises aux figures) est alors assurée par la diode 2 alors polarisée en direct. Quelques alternances de la tension Vd peuvent être nécessaires pour charger suffisamment le condensateur 5 et permettre le démarrage du système.

Les figures 5A et 5B illustrent un exemple en régime établi et, pour simplifier, supposent une tension Vd rectangulaire (par exemple, issue d'une alimentation à découpage). Tout ce qui sera exposé par la suite s'applique également dans le cas d'une tension Vd de forme sinusoïdale ou autre, pourvu que celle-ci soit alternative.

Pendant les périodes ou alternances où la tension Vd aux bornes du transistor 1 est positive, celui-ci est bloqué (Vc = 0). C'est pendant ces périodes que se charge le condensateur 5.

A un instant t1 où la tension Vd s'annule (changement d'alternance et passage vers une alternance négative), la tension inverse (tension négative dans l'orientation de la figure) est d'abord limitée à un premier seuil TH1 correspondant à la tension seuil (de l'ordre de 0,7 Volt) de la diode 2. En effet, dès que la tension Vd atteint cette valeur négative, la diode 2 conduit et introduit une chute de tension directe de valeur TH1. Le circuit 3 est conçu pour détecter l'apparition de cette tension négative et pour provoquer la fermeture du transistor 1 à un instant t2 qui suit l'instant t1 avec une durée prédéterminée. A l'instant t2, le transistor 1 est mis en conduction, ce qui réduit la chute de tension en direct à la tension de seuil TH2 de ce transistor. En pratique, cette chute de tension est, au pire, inférieure à 0,2 et peut même être réduite à environ 50 mV. Elle est liée à la résistance du transistor MOS à l'état passant (RdsON) et dépend donc du courant fixé par l'application. Elle dépend également de la taille du transistor et de la tension d'avalanche de la technologie.

L'ouverture du transistor 1 doit intervenir à un instant t3 qui précède un instant (en principe inconnu) t4 de changement d'alternance (passage vers la nouvelle alternance positive).

Selon l'invention, on tire profit du fait que les variations de rapport cyclique de la tension Vd sont généralement faibles d'une période à l'autre pour prédire l'instant de t4 de changement d'alternance par rapport à la période P précédente de la tension Vd. En fait, le circuit 3 détermine une durée de fermeture (t3-t2) par rapport à la période précédente de la tension Vd. L'intervalle de temps Δt = t4-t3 est asservi par le circuit 3 lors d'un changement de rapport cyclique pour être maintenu à une valeur prédéterminée choisie en fonction de l'importance maximale des variations de rapport cyclique attendues d'une période à une autre dans l'application considérée.

L'ouverture du transistor 1 en avance par rapport à l'apparition de l'alternance positive est indispensable pour éviter une conduction du système pendant cette alternance positive, ce qui annulerait l'effet de redressement recherché. Par contre, lors de la fermeture du transistor (instant t2), le temps mort (écart entre les instants t1 et t2) peut le cas échéant être supprimé si l'application autorise une mise en conduction dès le début de l'alternance négative.

Plusieurs moyens peuvent être envisagés pour asservir l'intervalle de temps Δt sur une durée minimale prédéterminée de façon à retarder l'instant t3 en cas d'accroissement de la période P de la tension Vd ou à l'inverse d'avancer l'instant t3 en cas de raccourcissement de la période P, en tenant compte d'au moins une période précédente.

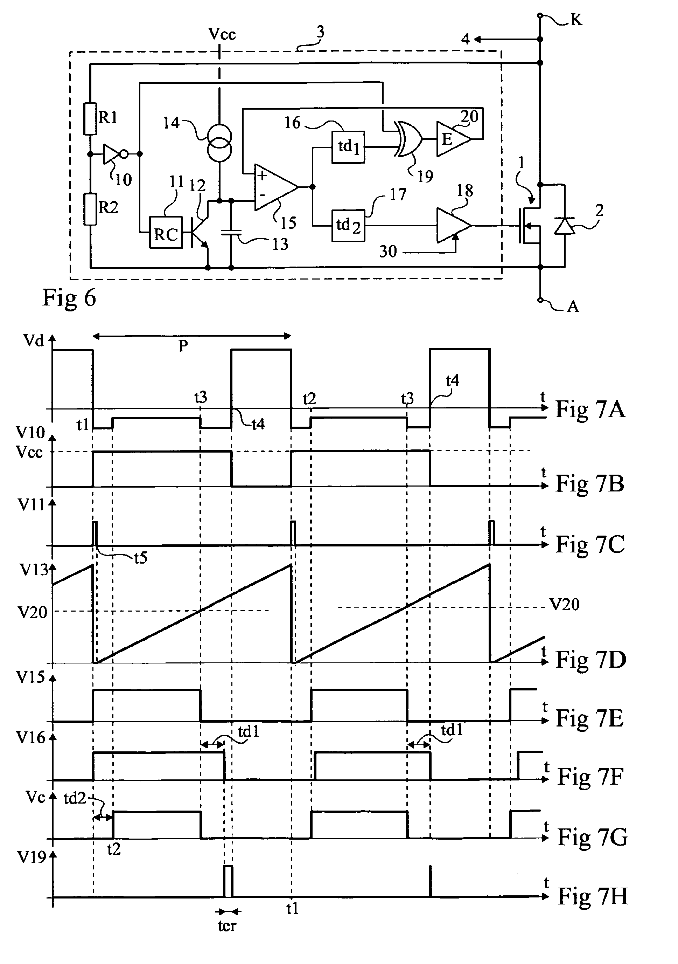

La figure 6 représente le schéma d'un exemple de réalisation d'un circuit 3 selon l'invention mettant en oeuvre ces fonctions. On retrouve le transistor 1 à commander ainsi que la diode 2 en parallèle. Pour simplifier l'exposé, les moyens de fourniture de la tension d'alimentation Vcc n'ont pas été représentés en figure 6. Ceux-ci sont, par exemple, constitués de la diode 4 et du condensateur 5 comme dans la figure 4.

Les figures 7A à 7H seront décrites en même temps que la figure 6 dont elles expliquent le fonctionnement par des chronogrammes représentant des exemples d'allures en des points caractéristiques du circuit.

Comme cela a été exposé précédemment, le fonctionnement du circuit est conditionné par la disparition de la tension Vd ou plus particulièrement le passage d'une alternance positive à négative de cette tension Vd (figure 7A, instant t1) avec les conventions de sens des figures.

La détection du sens de la tension Vd s'effectue au moyen d'un pont diviseur résistif R1-R2 connecté aux bornes K et A et dont le point milieu est relié en entrée d'un inverseur 10. L'inverseur 10 sert à mettre en forme numérique le signal de détection. La tension V10 (figure 7B) en sortie de l'inverseur 10 est à un niveau positif (état 1 correspondant sensiblement à la tension Vcc d'alimentation de l'inverseur) à partir de l'instant t1 et pendant toute la durée de l'alternance négative de la tension Vd, c'est-à-dire jusqu'à l'instant t4.

La sortie de l'inverseur 10 attaque un différenciateur 11 (par exemple, une cellule résistive et capacitive RC) dont la sortie est reliée à la base d'un transistor bipolaire de type NPN (ou moyen équivalent) dont le rôle est de court-circuiter un condensateur 13 recevant autrement un courant d'une source de courant 14 tirant son énergie de l'alimentation Vcc. L'émetteur du transistor 12 est connecté à la borne A tandis que son collecteur est connecté au point milieu de l'association en série de la source 14 et du condensateur 13. Le signal V11 (figure 7C) en sortie du différenciateur présente une impulsion de courte durée à chaque instant t1 de disparition de la tension Vd. Cette impulsion ferme le transistor 12, ce qui provoque la décharge du condensateur 13 (tension V13, figure 7D). A partir de l'instant t5 où la commande du transistor 12 disparaît, la charge du condensateur 13 par la source de courant constant 14 reprend. L'écart entre les instants t1 et t5, fixé par la constante de temps du différenciateur 11, est choisi pour être le plus faible possible. On génère donc un signal en dent de scie de période P (à l'impulsion t5-t1 près).

La tension V13 est appliquée en entrée inverseuse d'un amplificateur opérationnel 15. La sortie de l'amplificateur 15 est envoyée en entrée de deux éléments de temporisation (par exemple des lignes à retard) 16 et 17 apportant des retards respectifs prédéterminés td1 et td2. La sortie V15 (figure 7E) de l'amplificateur 15 passe à l'état haut à l'instant t1 où le potentiel de son entrée inverseuse disparaît. La figure 7F illustre l'allure de la tension V16 en sortie de l'élément de retard 16. De façon arbitraire, on a supposé dans cet exemple que le retard td1 était supérieur au retard td2. On notera toutefois que ces retards n'ont pas besoin d'être reliés l'un à l'autre. Le retard td1 correspond à l'intervalle de temps prédéterminé minimal entre les instants t3 et t4 alors que le retard td2 correspond au retard prédéterminé à la fermeture de l'interrupteur 1 (écart entre les instants t1 et t2).

Dans l'exemple de la figure 6, on suppose que l'élément retardateur 16 n'agit que sur les fronts descendants du signal V15 et n'apporte aucun retard sur les fronts montants. De même, on suppose que l'élément retardateur 17 n'agit que sur les fronts montants du signal V15. Ces suppositions sont cohérentes dans la mesure où les temps td1 et td2 sont en pratique négligeable devant la période de commutation.

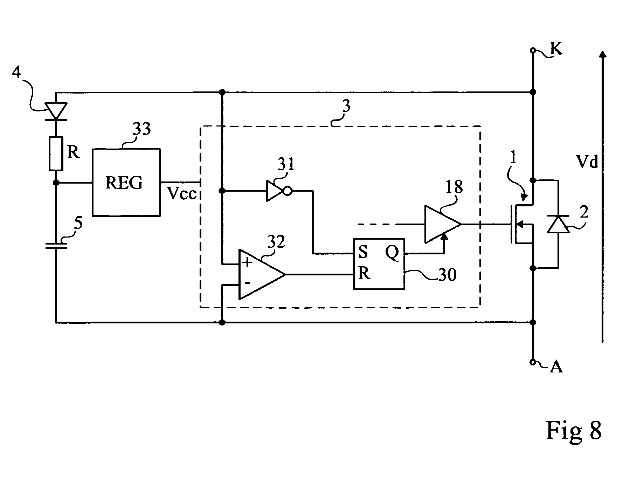

La figure 7G illustre l'allure de la tension Vc qui correspond à la sortie de l'élément 17. Optionnellement, un "buffer" ou amplificateur adaptateur de niveau 18 est prévu entre la sortie de l'élément 17 et la grille du transistor 1. Cet amplificateur 18 est alors, de préférence, commandable comme cela sera décrit ultérieurement en relation avec la figure 8.

La sortie de l'élément 16 est combinée dans une porte 19 de type OU-Exclusif avec l'état détecté par l'inverseur 10 (signal V10). La figure 7H illustre le résultat de cette combinaison (signal V19) qui traverse un intégrateur 20 avant d'être rebouclé sur l'entrée non-inverseuse de l'amplificateur 15. La valeur de l'erreur fournie par l'intégrateur 20 est visible en figure 7D (niveau V20) et l'instant où la rampe du signal V13 atteint cette valeur V20 correspond à l'instant t3 où l'intervalle td1 commence à être décompté par l'élément 16.

Cela revient à ajouter, à la durée td1, un temps variable ter qui tend vers 0 par l'asservissement. Ce temps ter correspond à l'erreur d'asservissement dont l'intégrale se trouve multipliée par un coefficient E par l'intégrateur 20. Cela correspond approximativement à un système linéaire du premier ordre. Plus la constante E est grande, plus une variation du rapport cyclique est récupérée rapidement. Il n'y a en théorie pas de limite à la valeur E, sauf d'éventuels problèmes de saturation ou similaire.

En figure 7, on considère le cas où l'erreur ter s'annule sur la deuxième période. L'écart entre les instants t3 et t4 correspond alors à la constante td1. Bien entendu, en pratique, la durée ter tend vers zéro mais n'est jamais réellement nulle.

De préférence, on limite la variation possible de la durée ter à la constante td1 afin d'éviter que, lorsque l'erreur ter se soustrait à la constante td1, le transistor 1 soit conducteur alors que la tension Vd est positive.

Un avantage de l'invention est que le circuit de commande du transistor est complètement autonome et ne requiert pas de référence de tension fixe (par exemple, la masse) du circuit auquel est connecté l'élément de redressement. La seule contrainte est que, pour permettre son alimentation (fourniture de la tension Vcc) et un fonctionnement correct, il faut que le signal appliqué aux bornes du transistor 1 soit bien un signal alternatif.

La figure 8 représente partiellement des éléments additionnels du circuit des figures 4 et 6 selon un mode de réalisation préféré de l'invention. Le circuit 3 de la figure 8 comprend les éléments décrits en relation avec la figure 6 dont seul le buffer 18 commandable a été représenté.

Selon ce mode de réalisation, le circuit 18 est commandé (activé ou désactivé) pour bloquer le signal de commande du transistor 1 sous l'effet d'une bascule 30 de type RS. L'entrée de mise à 1 (S) de la bascule 30 est reliée, par un inverseur 31, à la cathode K et son entrée de remise à 0 (R) est reliée à la sortie d'un amplificateur opérationnel 32. Les entrées inverseuse et non inverseuse respectives de l'amplificateur 32 sont reliées aux bornes K et A. Le rôle d'un tel montage est d'ouvrir le transistor MOS si, accidentellement, la tension aux bornes K et A s'inverse pendant une alternance négative. En effet, dès que la tension Vd devient positive, la sortie de l'amplificateur 22 commute vers un état haut, ce qui bloque l'amplificateur 18. Par contre, à chaque front descendant de la tension Vd, le signal S passe à l'état 1, ce qui active l'amplificateur 18.

La figure 8 illustre une autre variante concernant le circuit d'alimentation. Il s'agit d'insérer une résistance R entre la diode 4 et le condensateur 5. Cette résistance R permet que le courant de charge du condensateur 5 soit de type courant de fuite alors qu'il est de type courant de recouvrement en l'absence de résistance R. Le cas échéant, la tension fournie par le condensateur 5 peut être régulée par un circuit 33 (REG) avant de fournir la tension Vcc au bloc 3.

Un avantage de l'invention est qu'elle permet de disposer d'un circuit de redressement unidirectionnel et autonome susceptible de remplacer une diode dans de nombreuses applications. De plus, l'invention permet de remplacer un transistor dans un fonctionnement synchrone dans la mesure où le circuit fait une synchronisation automatique par rapport à la tension présente entre les bornes A et K. Dans ce genre d'application, l'invention permet de préserver la position de l'interrupteur sur la ligne positive (contrairement à la figure 2 où le transistor N1 est sur la ligne de masse). On évite ainsi de couper la ligne de masse, ce qui améliore considérablement le respect des contraintes électromagnétiques.

Un autre avantage de l'invention est que (à l'exception des courtes durées de commutations (durées td2 et td1+ter), la chute de tension série de l'élément de redressement de l'invention correspond à celle d'un transistor MOS et est donc considérablement plus faible que celle d'une diode.

Bien entendu, la présente invention est susceptible de diverses variantes et modifications qui apparaîtront à l'homme de l'art sans sortir du cadre des revendications annexées. En particulier, d'autres circuits que ceux illustrés en relation avec la figure 6 pourront être utilisés pour réaliser les fonctions d'introduction d'un retard prédéterminé à la fermeture et d'un retard variable à l'ouverture du transistor MOS. De même, dans une réalisation du type de celle de la figure 6, les états logiques choisis pour le fonctionnement du circuit 3 sont arbitraires pourvu que le niveau du signal Vc soit compatible avec la commande du transistor 1.

De plus, la connexion d'un circuit de redressement selon l'invention dans un convertisseur classique est à la portée de l'homme du métier à partir des indications fonctionnelles données ci-dessus.

En outre, bien que le recours à un transistor MOS soit préféré, d'autres commutateurs sont envisageables. Par exemple, on pourra utiliser un transistor bipolaire en prévoyant une commande en courant et un surdimensionnement de la capacité 5 d'alimentation du système.

## Revendications

1. Circuit de commande (3) d'un commutateur (1) à commander de façon unidirectionnelle alors que la tension présente à ses bornes est une tension alternative, comportant
des moyens pour retarder la fermeture du commutateur par rapport à un passage par zéro de la tension (Vd) à ses bornes ; et **caractérisé par**
des moyens pour déclencher l'ouverture du commutateur suite à sa fermeture, à l'issu d'un intervalle de temps prédéterminé (td1) majoré ou minoré d'un temps d'erreur (ter) asservi sur le rapport cyclique de la tension alternative aux bornes du commutateur, lors d'une ou plusieurs périodes précédentes.

2. Circuit selon la revendication 1, dans lequel ladite durée prédéterminée (td1) est choisie en fonction des variations maximales attendues du rapport cyclique.

3. Circuit selon la revendication 1, dans lequel un condensateur (5) et une diode (4) sont connectés en série entre les bornes (K, A) du commutateur (1) pour fournir une tension d'alimentation (Vcc) au circuit de commande (3), le condensateur étant chargé quand l'interrupteur (1) est ouvert.

4. Circuit selon la revendication 1, comprenant :
un circuit (R1, R2, 10) de détection du signe de la tension aux bornes du commutateur (1) ;
un générateur de rampe (11, 12, 13, 14) réinitialisé à chaque changement de signe de la tension aux bornes du commutateur dans un sens où il doit devenir conducteur, ledit générateur étant commandé par le circuit de détection ;
un moyen (15, 17, 18) pour provoquer la fermeture du commutateur suite à la détection d'un changement de signe de la tension à ses bornes ; et
un circuit (15, 16, 19, 20) d'asservissement de la durée de fermeture sur une valeur prédéterminée.

5. Circuit selon la revendication 4, dans lequel un premier élément retardateur (16) apporte un retard minimal (td1) à une consigne d'ouverture du commutateur (1) qui suit sa fermeture.

6. Circuit selon la revendication 5, dans lequel un deuxième élément retardateur (17) apporte un retard à la fermeture du commutateur (1) par rapport à l'inversion de la tension à ses bornes.

7. Circuit selon la revendication 1, dans lequel un amplificateur de sortie (18) fournissant le signal de commande du commutateur (1) est commandé par des moyens (30, 31, 32) de détection d'une inversion de sens de la tension, pour provoquer l'ouverture du commutateur en cas d'inversion accidentelle de tension.

8. Circuit selon la revendication 1, dans lequel le commutateur est un transistor MOS.

9. Circuit selon la revendication 1, dans lequel une diode en parallèle sur le commutateur sert au démarrage.

10. Circuit de redressement à faible tension de seuil comprenant un commutateur (1) en parallèle avec une diode (2) constituée de préférence de sa diode parasite, et un circuit de commande (3) conforme à l'une quelconque des revendications 1 à 9, associé à un circuit d'alimentation (4, 5) prélevant son alimentation directement aux bornes du transistor commandé pendant que celui-ci est fermé.

11. Circuit selon la revendication 10, comportant exclusivement deux bornes de connexion externe.

## Claims

1. A circuit (3) for controlling a switch (1) to be controlled in a unidirectional fashion while the voltage present thereacross is an A.C. voltage, comprising:
means for delaying the switch turning-on with respect to a zero crossing of the voltage (Vd) thereacross; and
**characterized by**
means for triggering the switch turning-off after its turning on, at the end of a predetermined time interval (td1) plus or minus an error time (ter) controlled by the duty cycle of the A.C. voltage across the switch, in one or several previous periods.

2. The circuit of claim 1, wherein said predetermined duration (td1) is selected according to the maximum expected variations of the duty cycle.

3. The circuit of claim 1, wherein a capacitor (5) and a diode (4) are series-connected between the terminals (K, A) of the switch (1) to provide a supply voltage (Vcc) to the control circuit (3), the capacitor being charged when the switch (1) is off.

4. The circuit of claim 1, comprising:
a circuit (R1, R2, 10) for detecting the sign of the voltage across the capacitor (1);
a ramp generator (11, 12, 13, 14) reset on each sign switching of the voltage across the switch in a direction in which it must become conductive, said generator being controlled by the detection circuit;
a means (15, 17, 18) for causing the turning-on of the switch after detection of a sign switching of the voltage thereacross; and
a circuit (15, 16, 19, 20) for controlling the duration of the on state with a predetermined value.

5. The circuit of claim 4, wherein a first delay element (16) brings a minimum delay (td1) to a turn-off order of the switch (1) which follows its turning-on.

6. The circuit of claim 5, wherein a second delay element (17) brings a delay to the turning-on of the switch (1) with respect to the inversion of the voltage thereacross.

7. The circuit of claim 1, wherein an output amplifier (18) providing the control signal of the switch (1) is controlled by means (30, 31, 32) for detecting an inversion of the voltage direction, to cause the turning-off of the switch in case of an incidental voltage inversion.

8. The circuit of claim 1, wherein the switch is a MOS transistor.

9. The circuit of claim 1, wherein a diode in parallel on the switch is used for the starting.

10. A rectifying circuit with a low threshold voltage comprising a switch (1) in parallel with a diode (2) preferably formed of its parasitic diode, and the control circuit (3) of any of claims 1 to 9 associated with a supply circuit (4, 5) drawing its power supply directly from across the controlled transistor when said transistor is on.

11. The circuit of claim 10, exclusively comprising two external connection terminals.

## Patentansprüche

1. Ein Schaltung (3) zum Steuern eines Schalters (1), der auf eine unidirektionale Weise zu steuern ist, während die Spannung, die darüber vorhanden ist, eine Wechselspannung (A.C.-Spannung) ist, wobei die Schaltung Folgendes aufweist:
Mittel zum Verzögern des Schaltereinschaltens mit Bezug auf einen Nulldurchgang von der Spannung (Vd) darüber; und **gekennzeichnet durch**
Mittel zum Anstoßen bzw. Triggern des Schalterausschaltens nach seinem Einschalten, an dem Ende von einem vorherbestimmten Zeitintervall (td1) plus oder minus einer Fehlerzeit (ter), gesteuert **durch** den Arbeitszyklus von der Wechselspannung über den Schalter und zwar in einer oder mehreren vorhergehenden Perioden.

2. Schaltung nach Anspruch 1, wobei die vorher bestimmte Dauer (td1) gemäß den maximalen erwarteten Variationen von dem Arbeitszyklus gewählt ist.

3. Schaltung nach Anspruch 1, wobei ein Kondensator (5) und eine Diode (4) in Reihe verbunden sind zwischen den Anschlüssen (K, A) von dem Schalter (1) zum Vorsehen einer Versorgungsspannung (Vcc) an die Steuerschaltung (3), wobei der Kondensator geladen wird, wenn der Schalter (1) aus ist.

4. Schaltung nach Anspruch 1, die Folgendes aufweist:
eine Schaltung (R1, R2, 10) zum Detektieren des Vorzeichens von der Spannung über den Kondensator (1);
einen Rampengenerator (11, 12, 13, 14) der zurückgesetzt wird, bei jedem Vorzeichenwechsel von der Spannung über den Schalter in einer Richtung in der er leitend werden muss, wobei der Generator durch die Detektionsschaltung gesteuert wird;
ein Mittel (15, 17, 18) zum Bewirken des Einschaltens von dem Schalter nach der Detektion von einem Vorzeichenwechsel von der Spannung darüber; und
eine Schaltung (15, 16, 19, 20) zum Steuern der Dauer von dem Ein-Zustand mit einem vorher bestimmten Wert.

5. Schaltung nach Anspruch 4, wobei ein erstes Verzögerungselement (16) eine minimale Verzögerung (td1) zu einer Ausschaltordnung bzw. -anweisung von dem Schalter (1) bringt, welche seinem Einschalten folgt.

6. Schaltung nach Anspruch 5, wobei ein zweites Verzögerungselement (17) eine Verzögerung zu dem Einschalten von dem Schalter (1) bringt, und zwar mit Bezug auf die Inversion von der Spannung darüber.

7. Schaltung nach Anspruch 1, wobei ein Ausgangsverstärker (18), der das Steuersignal von dem Schalter (1) vorsieht, gesteuert wird durch Mittel (30, 31, 32) zum Detektieren einer Inversion von der Spannungsrichtung, um das Ausschalten von dem Schalter im Fall einer zufälligen Spannungsinversion zu bewirken.

8. Schaltung nach Anspruch 1, wobei der Schalter ein MOS Transistor ist.

9. Schaltung nach Anspruch 1, wobei eine Diode parallel zu dem Schalter für das Starten genutzt wird.

10. Eine Gleichrichtschaltung mit einer niedrigen Schwellenspannung, die einen Schalter (1) parallel mit einer Diode (2) aufweist, die vorzugsweise aus seiner parasitären Diode gebildet ist, und die Steuerschaltung (3) nach irgendeinem der Ansprüche 1 bis 9 assoziiert ist mit einer Versorgungsschaltung (4, 5) die ihre Energieversorgung direkt über den gesteuerten Transistor zieht, wenn der Transistor Ein ist.

11. Schaltung nach Anspruch 10, die exklusiv zwei externe Verbindungsanschlüsse aufweist.
